# EUROPEAN PATENT APPLICATION

(11) **EP 4 325 601 A2**
(43) Date of publication of application: **21.02.2024**
(21) Application number: 23174067.1
(22) Date of filing: 17.05.2023
(51) Int. Cl.: H01M 4/36, H01M 4/38, H01M 4/58, H01M 4/583, H01M 10/052

(54) **CATHODE MATERIAL FOR LITHIUM-SULFUR BATTERY AND LITHIUM-SULFUR BATTERY INCLUDING SAME**

(30) Priority: 28.07.2022 KR 20220094135; 21.11.2022 KR 20220156801
(71) Applicant: LG Energy Solution, Ltd., Seoul 07335 (KR); Korea Advanced Institute of Science and Technology, Daejeon 34141 (KR)
(72) Inventor: JEONG, Yo-Chan, 34122 Daejeon (KR); LEE, Jinwoo, 34141 Daejeon (KR); KIM, Seoa, 34141 Daejeon (KR); SOHN, Kwon-Nam, 34122 Daejeon (KR); YANG, Seung-Bo, 34122 Daejeon (KR); LIM, Won-Gwang, 34141 Daejeon (KR)
(74) Representative: Goddar, Heinz J.

(57) **Abstract**

The present disclosure relates to a carbon composite for use in a cathode of a lithium-sulfur battery and a method for preparing the same. The carbon composite includes: a porous carbon substrate; transition metal composite particles located on one or more of the outer surface of the porous carbon substrate and the inner surface of pores and including a core including transition metal particles and a carbon coating layer coating at least a part of the surface of the core; and at least one heteroelement doped in at least one of the porous carbon substrate and the carbon coating layer, wherein the heteroelement comprises one or more selected from nitrogen (N), sulfur (S) and oxygen (O).

## Description

### TECHNICAL FIELD

The present disclosure relates to a cathode material for a lithium-sulfur battery and a lithium-sulfur battery including the same.

### BACKGROUND ART

A lithium-sulfur battery is a battery system using a sulfur-based material having a sulfur-sulfur (S-S) bond as a cathode active material and a lithium metal as an anode active material. Sulfur, which is the main component of the cathode active material, is advantageous in that it is abundant globally, has no toxicity and is relatively light.

As the applications of secondary batteries expand toward electric vehicles (EVs), energy storage systems (ESSs), etc., the lithium-sulfur battery capable of realizing theoretically higher energy storage density per weight (~2,600 Wh/kg) than the lithium-ion secondary battery exhibiting relatively lower energy storage density per weight (~250 Wh/kg) is drawing attentions.

During discharge of the lithium-sulfur battery, lithium, which is an anode active material, is oxidized as it releases an electron and is ionized to lithium cation and, the sulfur-based material, which is a cathode active material, is reduced as it accepts the electron. Through the reduction of the sulfur-based material, the S-S bond accepts two electrons and is converted to sulfur anion. The lithium cation produced from the oxidation of lithium migrates to a cathode via an electrolyte, and forms a salt by bonding with the sulfur anion produced from the reduction of the sulfur-based compound. Specifically, sulfur, which has a cyclic structure of S₈ before discharge, is converted to a lithium polysulfide (Li₂Sx) through reduction, which is finally reduced to lithium sulfide (Li₂S).

Since the sulfur used in the cathode active material is a nonconductor, the migration of the electrons produced from electrochemical reactions is difficult. In addition, there are the problems of release of polysulfides (LiSₓ) occurring during a charge-discharge process and decreased battery life and speed characteristics due to sluggish kinetic activity of electrochemical reaction caused by the low electrical conductivity of sulfur and lithium sulfide.

In this regard, researches have been conducted recently to improve the performance of a lithium-sulfur secondary battery by improving the kinetic activity of the redox reaction of sulfur in a charge-discharge process by using platinum (Pt) which has been frequently used as an electrochemical catalyst. However, since the precious metal catalysts such as platinum are expensive for commercialization and may be poisoned during the redox reaction of sulfur in a charge-discharge process, it is not easy to use them as cathode materials for lithium-sulfur secondary batteries.

Accordingly, the development of a cathode material which can improve the kinetic activity of electrochemical reactions during charge-discharge of a lithium-sulfur secondary battery and is favorable for commercialization in terms of cost is necessary.

Meanwhile, the nonconductor sulfur is supported on a support such as a porous carbon substrate for use in a cathode. If the lithium sulfide produced from the redox reaction of the battery as described above is formed on a carbon support as a 2D film, the mobility of electrons and lithium ions is decreased significantly and the utilization efficiency of sulfur is decreased, resulting in low reversible capacity and energy density of the lithium-sulfur battery.

Accordingly, reaches are being conducted recently to control lithium sulfide to have a 3D shape by solvation in an electrolyte using a solvent. But, the commercialization of the lithium-sulfur battery is still difficult because the solvent shows high reactivity for the lithium metal anode.

### DISCLOSURE

### Technical Problem

The present disclosure is directed to providing a cathode material which allows superior adsorption of lithium polysulfide and increases the kinetic activity of the redox reaction of sulfur.

Furthermore, the present disclosure is also directed to providing a carbon composite which can form lithium sulfide with a 3D structure on a porous carbon substrate during operation of a lithium-sulfur battery.

Specifically, the present disclosure is also directed to providing a carbon composite which can form lithium sulfide with a 3D shape using an electrolyte commonly used in the preparation of a lithium-sulfur battery, and a high-performance lithium-sulfur battery using the same.

### Technical Solution

In an aspect of the present disclosure, carbon composites of the following exemplary embodiments are provided. One or more of the following embodiments can be combined with each other. The embodiments achieved by combining two or more of the following embodiments have the features of the combined embodiments.

According to a first exemplary embodiment, there is provided a carbon composite comprising: a porous carbon substrate; transition metal composite particles located on one or more of the outer surface of the porous carbon substrate and the inner surface of pores and comprising a core comprising transition metal particles and a carbon coating layer coating at least a part of the surface of the core; and at least one heteroelement doped in at least one of the porous carbon substrate and the carbon coating layer, wherein the transition metal particles comprise at least one element selected from cobalt (Co) and iron (Fe), and the heteroelement comprises one or more selected from nitrogen (N), sulfur (S) and oxygen (O).

According to a second exemplary embodiment, in first exemplary embodiment, the carbon coating layer may cover the entire surface of the core.

According to a third exemplary embodiment, in the first or second exemplary embodiment, a ratio of the thickness of the carbon coating layer to the average particle diameter (D₅₀) of the transition metal composite particles may be 40% or less.

According to a fourth exemplary embodiment, in any of the first to third exemplary embodiments, the transition metal particles may further comprise one or more selected from zinc (Zn), vanadium (V), chromium (Cr), manganese (Mn), nickel (Ni), copper (Cu), zirconium (Zr), niobium (Nb), molybdenum (Mo), technetium (Tc), rubidium (Ru), rhodium (Rh), palladium (Pd), silver (Ag), cadmium (Cd), lanthanum (La), hafnium (Hf), tantalum (Ta), tungsten (W), osmium (Os), iridium (Ir), cerium (Ce), gadolinium (Gd), scandium (Sc), titanium (Ti), gallium (Ga) and indium (In).

According to a fifth exemplary embodiment, in any of the first to fourth exemplary embodiments, the transition metal particles may comprise 95 mol% of cobalt element based on 100 mol% of transition metal elements.

According to a sixth exemplary embodiment, in any of the first to fifth exemplary embodiments, the transition metal particles may comprise 100 mol% of cobalt element based on 100 mol% of transition metal elements.

According to a seventh exemplary embodiment, in any of the first to sixth exemplary embodiments, the core of the transition metal composite particles may have an average particle diameter (D₅₀) of 5 nm to 90 nm.

According to an eighth exemplary embodiment, in any of the first to seventh exemplary embodiments, the carbon coating layer may have a thickness of 10 nm or smaller.

According to a ninth exemplary embodiment, in any of the first to eighth exemplary embodiments, the carbon coating layer may contain crystalline carbon.

According to a tenth exemplary embodiment, in any of the first to ninth exemplary embodiments, the carbon coating layer may have a single layer structure of one layer or a multi-layer structure of two or more layers.

According to an eleventh exemplary embodiment, in any of the first to tenth exemplary embodiments, the carbon coating layer may have a single layer structure of one layer or a multi-layer structure of two to five layers.

According to a twelfth exemplary embodiment, in any of the first to eleventh exemplary embodiments, the carbon coating layer may comprise nitrogen element as the heteroelement and has a single layer structure of one layer or a multi-layer structure of two to four layers.

According to a thirteenth exemplary embodiment, in any of the first to twelfth exemplary embodiments, the transition metal composite particles may have an average particle diameter (D₅₀) of 2 nm to 100 nm.

According to a fourteenth exemplary embodiment, in any of the first to thirteenth exemplary embodiments, the porous carbon substrate may comprise one or more selected from carbon nanotube (CNT), graphene, graphene oxide (GO), reduced graphene oxide (rGO), carbon black, graphite, graphite nanofiber (GNF), carbon nanofiber (CNF), activated carbon fiber (ACF), activated carbon and fullerene.

According to a fifteenth exemplary embodiment, in any of the first to fourteenth exemplary embodiments, the porous carbon substrate may comprise carbon nanotube (CNT), and wherein the carbon nanotube may comprise entangled carbon nanotube (CNT).

According to a sixteenth exemplary embodiment, in any of the first to fifteenth exemplary embodiments, the content of the transition metal composite particles may be 15 wt% or less based on 100 wt% of the carbon composite.

According to a seventeenth exemplary embodiment, in any of the first to sixteenth exemplary embodiments, the content of the heteroelement may be 10 wt% to 50 wt% based on 100 wt% of the carbon composite.

According to an eighteenth exemplary embodiment, in any of the first to seventeenth exemplary embodiments, the number of bonding between the transition metal elements in the carbon composite may be larger than the number of bonding between the transition metal element and the heteroelement, and the bonding between the elements is identified by extended X-ray absorption fine structure (EXAFS) analysis.

In another aspect of the present disclosure, methods for preparing a carbon composite of the following exemplary embodiments are provided.

According to a nineteenth exemplary embodiment, there is provided a method for preparing the carbon composite according to any of the first to eighteenth exemplary embodiments" comprising a step of mixing and heat-treating a transition metal-containing precursor, a carbon precursor and a porous carbon substrate, wherein the transition metal-containing precursor comprises at least one element selected from cobalt (Co) and iron (Fe), and the carbon precursor comprises one or more heteroelement selected from nitrogen (N), sulfur (S) and oxygen (O).

According to a twentieth exemplary embodiment, in the nineteenth exemplary embodiment, the carbon precursor may comprise one or more selected from dopamine, polydopamine, melamine, 1,10-phenanthroline, polyaniline, carbon nitride (g-CN), glucose and phenylenediamine.

According to a twenty-first exemplary embodiment, in the nineteenth or twentieth exemplary embodiment, the method may comprise a step of preparing a metal-carbon (M-C) precursor complex by mixing the transition metal-containing precursor and the carbon precursor; a step of preparing a metal-carbon (M-C)-substrate precursor complex by mixing the metal-carbon precursor complex and the porous carbon substrate; and a step of heat-treating the metal-carbon-substrate precursor complex.

According to a twenty-second exemplary embodiment, in any of the nineteenth to twenty-first exemplary embodiments, the heat treatment may be performed at 600°C to 1,000°C.

In another aspect of the present disclosure, a cathode active material, a cathode and a lithium-sulfur battery of the following exemplary embodiments are provided.

According to a twenty-third exemplary embodiment, there is provided a cathode active material comprising: the carbon composite according to any of the first to eighteenth exemplary embodiments; and a sulfur-based compound.

According to a twenty-fourth exemplary embodiment, there is provided a cathode comprising the cathode active material according to the twenty-third exemplary embodiment.

According to a twenty-fifth exemplary embodiment, lithium-sulfur battery comprising a cathode, an anode, a separator disposed between the cathode and the anode, and an electrolyte, wherein the cathode comprises the cathode according to the twenty-fourth exemplary embodiment.

According to a twenty-sixth exemplary embodiment, there is provided a cathode comprising a cathode active material comprising a sulfur-based compound and the carbon composite according to any of the first to eighteenth exemplary embodiments as a conductive material.

According to a twenty-seventh exemplary embodiment, there is provided a lithium-sulfur battery comprising a cathode, an anode, a separator disposed between the cathode and the anode, and an electrolyte, wherein the cathode is the cathode according to the twenty-sixth exemplary embodiment.

### Advantageous Effects

A carbon composite according to an exemplary embodiment of the present disclosure has superior adsorptivity to lithium polysulfide (LiPS, Li₂Sx, 2 ≤ x ≤ 8). In addition, the carbon composite provides superior kinetic activity for redox reaction of sulfur.

In particular, the carbon composite provides superior kinetic activity for redox reaction of sulfur in a charge-discharge process by controlling the formed lithium sulfide to a 3D shape to facilitate ion transfer and suppress the increase in overvoltage in the 2D-shaped lithium sulfide.

Accordingly, a lithium-sulfur secondary battery using the carbon composite as a support for supporting a cathode additive and/or a cathode active material is advantageous in that the release of lithium polysulfide to an electrolyte is inhibited and high performance can be realized stably as the conversion rate of sulfur is improved.

In addition, the lithium-sulfur battery according to an exemplary embodiment of the present disclosure is superior in terms of the initial capacity, capacity retention rate depending on charge-discharge cycles and energy density of the battery.

### DESCRIPTION OF DRAWINGS

The accompanying drawings illustrate specific embodiments of the present disclosure and, together with the foregoing disclosure, serve to provide further understanding of the technical features of the present disclosure, and thus, the present disclosure should not be construed as being limited to the drawings.
FIG. 1 schematically shows the control of the shape of lithium sulfide formed on the surface of a carbon composite according to an exemplary embodiment of the present disclosure in a cathode during charge-discharge of a lithium-sulfur secondary battery.
FIG. 2a shows the TEM (transmission electron microscopy) images of carbon composites according to Example 1, Example 2 and Comparative Example 2.
FIG. 2b is a TEM photograph at different magnifications of the carbon composite according to Example 3 in this specification.
FIG. 2c is a SEM photograph of the carbon composite according to Example 4 in this specification.
FIG. 3 shows the TGA (thermogravimetric analysis) result for carbon composites according to Example 1, Example 2 and Comparative Example 2.
FIG. 4 shows the XPS (X-ray photoelectron spectroscopy) 2p spectra of nitrogen element of carbon composites according to Example 1, Example 2 and Comparative Example 2.
FIG. 5a shows the XPS spectra of transition metal elements of carbon composites according to Example 1, Example 2 and Comparative Example 2.
FIG. 5b shows the EXAFS (extended X-ray absorption fine structure) analysis result for the binding state of transition metals in carbon composites according to Example 1, Example 2 and Comparative Example 2.
FIG. 6 shows the chronoamperometry analysis result for carbon composites according to Example 1, Example 2 and Comparative Example 2 and Comparative Example 1 (CNT).
FIG. 7 shows the SEM (scanning electron microscopy) images of carbon composites according to Example 1, Example 2 and Comparative Example 2 and Comparative Example 1 (CNT) after first discharge at a current density of 0.05 C.
FIG. 8 shows the result of evaluating static current characteristics (a) and the capacity-voltage curves for the first cycle (b) of batteries using carbon composites according to Example 1, Example 2 and Comparative Example 2 and Comparative Example 1 (CNT).
FIG. 9 shows the TEM image of a carbon composite according to Comparative Example 4 (a) and the result of evaluating the battery performance of Comparative Example 3 and Comparative Example 4 (b).

### BEST MODE

Hereinafter, the present disclosure is described in detail. However, the present disclosure is not limited by the following description and, if necessary, the elements may be changed variously or combined selectively. Accordingly, it is to be understood that the present disclosure encompasses all modifications, equivalents and substitutes included in the spirit and technical scope of the present disclosure.

In the present specification, when a part is described to "include" a certain element, it means that other elements may be further included, rather than excluding other elements, unless specially stated otherwise. Terms like "including", "comprising", "containing" etc. however, include the possibility to have the meaning "consisting of' if not excluded explicitly.

In the present specification, the expression "A and/or B" means A or B or both.

Certain terminology used in the present specification is for convenience and not for limitation. For example, the terms indicating positions such as 'top', 'bottom', 'left', 'right', 'anterior', 'rear', 'inner' and 'outer' may be used to describe relative locations or directions rather than absolute positions or to indicate positions and orientations in the drawings to which reference is made. These terms include, in addition to the words listed above, derivatives thereof and words with similar meanings.

In an aspect of the present disclosure, there is provided a carbon composite that can be used as an electrochemical catalyst in a cathode of a lithium-sulfur secondary battery. The carbon composite can be an electrochemical catalyst.

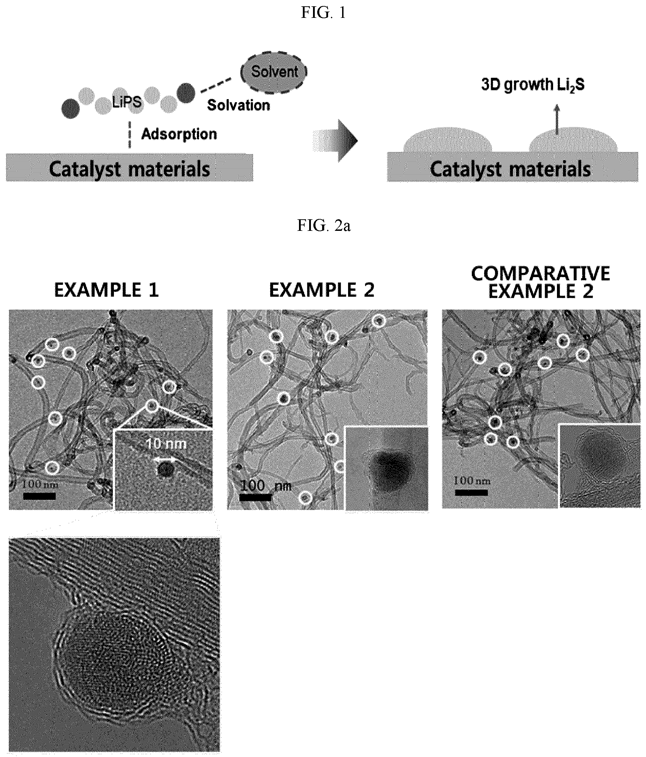

FIG. 1 schematically shows the function of the carbon composite.

The carbon composite according to an aspect of the present disclosure is (that is, can be used) for forming lithium sulfide (Li₂S) with a 3D shape on the surface of the carbon composite by controlling the adsorption strength between the surface of the carbon composite and lithium polysulfide (LiPS) solvated by electrolyte solvent molecules.

Although the growth of lithium sulfide with a 3D shape using an electrolyte with a high donor number has been reported, the electrolyte has the problem that irreversible decomposition on the surface of lithium metal is severe because it reacts readily with the lithium metal.

Thus, the inventors of the present disclosure have researched consistently to provide a cathode catalyst which is capable of growing lithium sulfide into a 3D shape while facilitating the adsorption and conversion of lithium polysulfide in common electrolytes, and have completed the present disclosure.

The carbon composite according to an aspect of the present disclosure is a carbon composite including: a porous carbon substrate; transition metal composite particles located on one or more of the outer surface of the porous carbon substrate and the inner surface of pores and including a core including transition metal particles and a carbon coating layer coating at least a part of the surface of the core; and at least one heteroelement doped in at least one of the porous carbon substrate and the carbon coating layer, wherein the transition metal particles include at least one element selected from cobalt (Co) and iron (Fe), and the heteroelement includes one or more selected from nitrogen (N), sulfur (S) and oxygen (O).

The carbon composite according to an aspect of the present disclosure comprises (1.) a porous carbon substrate, (2.) transition metal composite particles and (3.) at least one heteroelement. The carbon composite according to an aspect of the present disclosure may consist of (1.) a porous carbon substrate, (2.) transition metal composite particles and (3.) at least one heteroelement.

The transition metal composite particles are located (arranged) on the outer surface of the porous carbon substrate, the inner surface of pores, that is, inside the pores of the porous carbon substrate on a surface of the porous carbon substrate, or on both the outer surface of the porous carbon substrate and the inner surface of pores.

The transition metal composite particles comprise a core and a carbon coating layer. The core comprises transition metal particles, especially may consist of transition metal particles. The transition metal particles comprise at least one element selected from cobalt (Co) and iron (Fe). The carbon coating layer coats (covers) at least a part of the surface of the core.

The one or more heteroelement(s) are doped in at least one of the porous carbon substrate and the carbon coating layer, that is, may replace in the porous carbon substrate and/or the carbon coating layer a carbon atom, may be present in an interior of the porous carbon substrate and/or the carbon coating layer, may be adsorbed on a surface of the porous carbon substrate and/or the carbon coating layer etc. The heteroelement comprises one or more selected from nitrogen (N), sulfur (S) and oxygen (O).

In an exemplary embodiment of the present disclosure, the transition metal composite particles have catalytic activity for oxidation and reduction reactions of sulfur-based compounds such as one or more of sulfur (S₈), lithium sulfide (Li₂S), lithium polysulfide (Li₂Sx, 2 ≤ x ≤ 8) and disulfide compounds, as cathode active materials for a lithium-sulfur battery, that is, have respective catalytic activity if used as or in a cathode active material of a lithium-sulfur battery. In an embodiment of the present disclosure, the transition metal composite particle may be referred to as a catalyst, but the function of the transition metal composite particle is not limited thereto.

The transition metal composite particles include a core including transition metal particles and a carbon coating layer coating at least a part of the surface of the core, for example 50 %, 60 %, 70 %, 80 %, 90 %, 95 %, 99% of the surface of the core with respect to the total surface of the core. The carbon coating layer may coat (cover) the entire surface of the core. The coating degree may be determined by TEM.

In the present specification, the area of the core portion covered by the carbon coating layer may be measured through TEM, for example. The TEM may use G2 F30 S-Twin or Tencai, but is not limited thereto.

The transition metal composite particles may include the transition metal particles in the core as active catalytic components.

In an exemplary embodiment of the present disclosure, the core of the transition metal composite particles may include transition metal elements released from the transition metal particles as single atoms. And, for the catalytic activity of the carbon composite, the core of the transition metal composite particles may include transition metal particles formed through bonding between transition metal atoms.

The transition metal particles included in the core include transition metal elements may have catalytic activity for oxidation and reduction reactions of the sulfur-based compounds and control the shape of the formed lithium sulfide. For this purpose, the transition metal particles include at least one element selected from cobalt (Co) and iron (Fe).

In an exemplary embodiment of the present disclosure, the transition metal particles may further include, in addition to cobalt and iron, one or more selected from zinc (Zn), vanadium (V), chromium (Cr), manganese (Mn), nickel (Ni), copper (Cu), zirconium (Zr), niobium (Nb), molybdenum (Mo), technetium (Tc), rubidium (Ru), rhodium (Rh), palladium (Pd), silver (Ag), cadmium (Cd), lanthanum (La), hafnium (Hf), tantalum (Ta), tungsten (W), osmium (Os), iridium (Ir), cerium (Ce), gadolinium (Gd), scandium (Sc), titanium (Ti), gallium (Ga) and indium (In).

Each of the cobalt and iron may provide catalytic activity for oxidation and reduction of sulfur and may control the lithium sulfide formed on the surface of the carbon composite to have a 3D shape by exhibiting adequate bonding ability to the lithium sulfide.

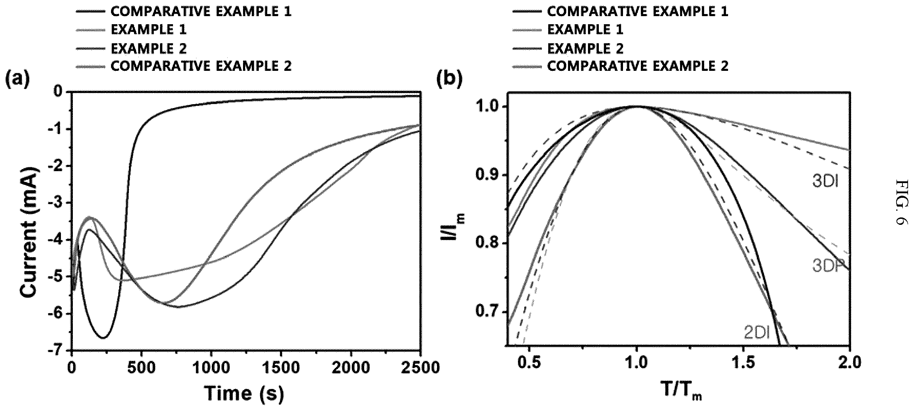

FIG. 6 shows a chronoamperometry analysis result for predicting the shape of lithium sulfide formed during the operation of a battery using a carbon composite according to an exemplary embodiment of the present disclosure. When Li2S particles grow into 2D shapes, they follow the Bewick, Fleischman, and Thirsk (BFT) model. Meanwhile, when Li2S particles grow into 3D shapes, they follow the Scharifker-Hills (SH) model. Referring to FIG. 6 in which the measured graph is analyzed by fitting, the graph fits the SH model, so it can be seen that the lithium sulfide formed on the surface of the carbon composite has a 3D shape.

In an exemplary embodiment of the present disclosure, chronoamperometric analysis may be conducted in a constant temperature chamber at 25 °C with PNE Solution's PESC05-0.1 equipment.

According to the present disclosure, since the transition metal particles included in the core include cobalt and/or iron, the lithium sulfide formed through oxidation and reduction of sulfur may have a 3D shape.

In contrast, in carbon composites not according to the present invention when the core of the transition metal composite particles includes transition metal particles having stronger binding ability to lithium sulfide as compared to cobalt and iron, the lithium sulfide formed on the surface of the carbon composite may have a 2D shape of a film due to the strong binding ability to the lithium sulfide. In this case, the catalytic activity of the carbon composite may be decreased due to the lithium sulfide formed on the surface of the carbon composite as a film.

For example, if the transition metal particles included in the core of the transition metal composite particles consist of nickel (Ni) element only (not according to the invention), the formed lithium sulfide may have a flat 2D shape of a film as compared to when they consist of iron and/or cobalt elements only.

In another exemplary embodiment of the present disclosure, if the transition metal particles included in the core consist of iron (Fe) element only, lithium sulfide with a 3D shape may be formed with a larger size as compared to when they consist of cobalt element only. In contrast, if they consist of cobalt element only, the lithium sulfide with a 3D shape may be formed with a smaller size and thus may have an increased surface area. As a result, a lithium-sulfur battery using the same may exhibit improved reversible capacity and life stability.

In this aspect, in another exemplary embodiment of the present disclosure, the transition metal particles may include 95 mol% of cobalt element based on 100 mol% of the transition metal elements. The transition metal particles may include 95 mol% of cobalt based on 100 mol% of the transition metal elements.

In another exemplary embodiment of the present disclosure, the transition metal particles may include 100 mol% of cobalt element based on 100 mol% of the transition metal elements. the transition metal particles may include 100 mol% of cobalt based on 100 mol% of the transition metal elements. That is to say, the transition metal particles may be cobalt metal particles.

In an exemplary embodiment of the present disclosure, the transition metal particle may have been obtained from by growing from a transition metal-containing precursor into metal particles and may have, for example, a spherical, oval, sheet, plate, fibrous, needle or hollow shape.

In an exemplary embodiment of the present disclosure, the core of the transition metal composite particles may consist of transition metal particles (100%) and, thus, the size of the core of the transition metal composite particle may be the same as the size of the transition metal particles.

In an exemplary embodiment of the present disclosure, the transition metal particles may have an average particle diameter (D₅₀) of, for example, 1 nm to 90 nm. Specifically, the transition metal particles may have an average particle diameter (D₅₀) of 1 nm to 80 nm, 2 nm to 50 nm, 5 nm to 40 nm, 5 nm to 35 nm, 5 nm to 30 nm, or 10 nm to 20 nm. When the size of the transition metal particles is within the above-described ranges, superior electron and/or ion conductivity may be achieved and, thus, it may be advantageous in terms of battery performance and preparation process, although the present disclosure is not limited thereto.

The size of the particles (for example, the average particle diameter (D₅₀)) may be measured by a method commonly used in the art without particular limitation. For example, the size of the particles (for example, the average particle diameter (D₅₀)) may be measured by scanning electron microscopy (SEM), field-emission electron microscopy or laser diffraction. The measurement using the laser diffraction method may be performed using, for example, a commercially available laser diffraction particle size analyzer (e.g., Microtrac MT 3000). The particle diameter (D₅₀) refers to the diameter corresponding to 50% in the particle size distribution. Particle Size Distribution (D50) is also known as the median diameter or the medium value of the particle size distribution, it is the value of the particle diameter at 50% in the cumulative distribution, that, if D50=x nm, then 50% of the particles in the sample are larger than x nm, and 50% smaller than x nm.

In the transition metal composite particles, at least a part of the surface of the transition metal particles is coated by a carbon coating layer, for example 50 %, 60 %, 70 %, 80 %, 90 %, 95 %, 99% of the surface of the the transition metal particles with respect to the total surface of the transition metal particles. The coating degree may be determined by TEM.

The carbon coating layer may serve to control the size of the transition metal particles and allow the transition metal composite particles to be supported on a porous carbon substrate by providing binding sites for the porous carbon substrate. In addition, the carbon coating layer may serve to stably maintain the metallic phase of the transition metal particles of the core. For example, the carbon coating layer may serve to stably maintain the catalytic activity of the transition metal particles during operation of a lithium-sulfur battery by preventing the lithium polysulfide in the electrolyte from chemically bonding directly to the surface of the transition metal particles. However, the function of the carbon coating layer in the present disclosure is not limited to those described above.

In an exemplary embodiment of the present disclosure, the carbon coating layer may coat (cover) the entire surface of the core. As will be described later, if the carbon coating layer is formed on the entire surface of the core, an advantageous effect may be exhibited in terms of active stabilization of the transition metal composite particles by the carbon coating layer, but the present disclosure is not limited thereto.

In an exemplary embodiment of the present disclosure, a ratio of the thickness of the carbon coating layer to the average particle diameter (D₅₀) of the transition metal composite particles (that is, the transition metal composite particles comprising both the core comprising transition metal particles and the carbon coating layer) may be 40% or smaller. For example, the ratio of the thickness of the carbon coating layer to the average particle diameter (D₅₀) of the transition metal composite particles may be 30% or less, 25% or less, 20% or less, or 15% or less. For example, the ratio of the thickness of the carbon coating layer to the average particle diameter (D₅₀) of the transition metal composite particles may be 1% or more, 5% or more, 7.5% or more, or 10% or more. For example, the ratio of the thickness of the carbon coating layer to the average particle diameter (D₅₀) of the transition metal composite particles may be 10% to 20% or 10% to 15%. When the ratio of the thickness of the carbon coating layer to the average particle diameter of the transition metal composite particles is within the above-described ranges, an advantageous effect can be exhibited in terms of active stabilization of the transition metal composite particles by the carbon coating layer, but the present disclosure is not limited thereto.

In an exemplary embodiment of the present disclosure, the carbon coating layer covering the surface of the transition metal composite particles may have a uniform thickness. For example, the standard deviation (△d) of the thickness of the carbon coating layer measured at 10 random points of the carbon coating layer formed on the surface of the core may be 0.5 nm or less.

In an exemplary embodiment of the present disclosure, the carbon coating layer covers the entire surface of the transition metal composite particles, and the standard deviation (△d) of the thickness measured at 100 random points on the entire surface of the carbon coating layer may be 0.5 nm or less.

In an exemplary embodiment of the present disclosure, the carbon coating layer may include crystalline carbon. For example, in another exemplary embodiment of the present disclosure, the carbon coating layer may consist of crystalline carbon. For example, the carbon coating layer may consist only of crystalline carbon which is formed from carbonization of a carbon precursor. "Crystalline" in terms of the present disclosure may refer to the presence of three-dimensional order on the level of atomic dimensions. Crystallinity may be detected by diffraction techniques, heat-of-fusion measurements, TEM etc. For example, crystalline may mean that the respective carbon shows at least one distinct peak in a XRD spectrum. An amount of disorder within the crystalline region is not incompatible with this concept.

Referring to FIG. 2a, through the TEM photograph of the carbon composite according to an embodiment of the present disclosure, it can be confirmed that the carbon coating layer formed on the surface of the core including transition metal composite particles is composed of crystalline carbon.

In an exemplary embodiment of the present disclosure, the carbon coating layer may include at least one heteroelement as a doping element, in addition to carbon. Specifically, the heteroelement may include one or more selected from nitrogen (N), sulfur (S) and oxygen (O).

As described below, for preparation of the carbon composite, a step of mixing the porous carbon substrate, the transition metal-containing precursor and the carbon precursor and then conducting heat treatment may be performed. The carbon precursor may include one or more heteroelement selected from nitrogen, sulfur and oxygen. The carbon coating layer is formed on the surface of the transition metal particles by carbon derived from the carbon precursor, and the heteroelement derived from the carbon precursor is doped in at least one of the porous carbon substrate and the carbon coating layer.

The carbon coating layer may be coated to a thickness of 40% or smaller, specifically 30% or smaller, 25% or smaller, 20% or smaller, or 15% or smaller of the average particle diameter of the transition metal composite particles. The carbon coating layer may be coated to a thickness of 1% or more, specifically 2% or more, 5% or , 7.5% or more, or 10% or more of the average particle diameter of the transition metal composite particles. The carbon coating layer may be coated to a thickness of for example 10% to 20%, or 10% to 15% of the average particle diameter of the transition metal composite particles. As the carbon coating layer is coated on the surface of the transition metal particles with a small thickness, it allows uniform supporting of the transition metal particles on the porous carbon substrate while exhibiting superior catalytic activity of the transition metal particles. For example, since the thickness of the carbon coating layer may be less than 40% of the total thickness of the transition metal composite particles, it is possible to maintain a smooth interaction between the transition metal particles located inside the carbon coating layer and lithium polysulfide approaching from the outside of the carbon coating layer. In an exemplary embodiment of the present disclosure, as the thickness of the carbon coating layer becomes thinner, the interaction between the transition metal particles and the lithium polysulfide is improved, and accordingly it may be advantageous in terms of the catalytic activity of the transition metal particles, but the present disclosure is not limited thereto.

In an exemplary embodiment of the present disclosure, a ratio of the thickness of the carbon coating layer to the average particle diameter of the transition metal composite particles may be 1% to 40%, 1% to 25%, 5% to 20%, or 10% to 20%.

If the transition metal particles are supported on the carbon composite in the absence of the carbon coating layer, the catalytic stability of the transition metal particles may be decreased significantly because of nonuniform size and, accordingly, the life stability of a battery using the same may be unsatisfactory.

In this aspect, in an exemplary embodiment of the present disclosure, the carbon coating layer may be coated on the entire surface of the core of the transition metal composite particles.

In an exemplary embodiment of the present disclosure, the carbon coating layer may have a thickness of, for example, 10 nm or smaller. Specifically, the carbon coating layer may have a thickness of 5 nm or smaller. In an exemplary embodiment of the present disclosure, the carbon coating layer may have a thickness of, for example, 0.5 nm or larger. Specifically, the carbon coating layer may have a thickness of 1 nm or larger. More specifically , the carbon coating layer may have a thickness of 1 nm to 5 nm or 0.5 nm to 2 nm.

The thickness of the carbon coating layer may be measured, for example, by microscopic observation of the carbon composite such as SEM, TEM, etc., although the method of measuring the thickness of the carbon coating layer is not limited thereto.

In this specification, unless otherwise specified, SEM images may be obtained using S-4800 feld emission, Hitachi, and TEM images may be obtained using G2 F30 S-Twin, Tencai.

In an exemplary embodiment of the present disclosure, the carbon coating layer may consist of a single layer structure having one layer, that is, may consist of only one layer.

In another exemplary embodiment of the present disclosure, the carbon coating layer may have a multi-layer structure of two or more layers, that is, the carbon coating layer may consist of two or more distinct layers. For example, the carbon coating layer having a multi-layer structure may consist of two to five layers, of two to four layers, or of two to three layers. The carbon composite may be advantageous in terms of catalytic activity when the carbon coating layer consists of multiple layers, although the present disclosure is not limited thereto.

In another exemplary embodiment of the present disclosure, the carbon coating layer may have a multi-layer structure of two to three layers, that is, consisting of two to three layers, which coats the entire surface of the core of the transition metal composite particles, and the carbon coating layer may have a total thickness of 5 nm or smaller, and may consist of crystalline carbon doped with at least one nitrogen element.

The transition metal composite particles described above, which includes the core including the transition metal particles and the carbon coating layer coating at least a part of the core, are located only at least one of the outer surface of the porous carbon substrate and the inner surface of pores as a catalyst that provides activity for oxidation and reduction of sulfur.

In an exemplary embodiment of the present disclosure, the shape of the transition metal composite particles may correspond to the shape of the transition metal particles included in the core. For example, the transition metal particles may have a spherical, oval, sheet, plate, fibrous, needle or hollow shape.

In an exemplary embodiment of the present disclosure, the core of the transition metal composite particles may have an average particle diameter (D₅₀) of 1 nm to 90 nm, more specifically 5 nm to 40 nm, 5 nm to 30 nm, 5 nm to 25 nm, or 10 nm to 20 nm, and may include a carbon coating layer having a thickness of 40% or smaller, more specifically 25% or smaller, 20% or smaller, 15% or smaller, 10% or smaller, or 5% or smaller of the average thickness of the transition metal composite particles and coating the surface of the core. The size of the transition metal composite particles (for example, the average particle diameter (D₅₀)) may be measured by a method commonly used in the art without particular limitation. For example, the size of the transition metal composite particles (for example, the average particle diameter (D₅₀)) may be measured by scanning electron microscopy (SEM), field-emission electron microscopy or laser diffraction. The measurement using the laser diffraction method may be performed using, for example, a commercially available laser diffraction particle size analyzer (e.g., Microtrac MT 3000). The particle diameter (D₅₀) refers to the diameter corresponding to 50% in the particle size distribution. Particle Size Distribution (D50) is also known as the median diameter or the medium value of the particle size distribution, it is the value of the particle diameter at 50% in the cumulative distribution, that, if D50=x nm, then 50% of the particles in the sample are larger than x nm, and 50% smaller than x nm.

In another exemplary embodiment of the present disclosure, the transition metal composite particles may have an average particle diameter (D₅₀) of, for example, at least 2 nm, at least 5 nm, at least 10 nm or at least 11 nm to. In another exemplary embodiment of the present disclosure, the transition metal composite particles may have an average particle diameter (D₅₀) of, for example, 100 nm or less, 90 nm or less, 80 nm or less, 75 nm or less, 60 nm or less, 50 nm or less, 40 nm or less, 30 nm or less, 25 nm or less, or 21 nm or less. In another exemplary embodiment of the present disclosure, the transition metal composite particles may have an average particle diameter (D₅₀) of, for example, 2 nm to 100 nm, 2 nm to 90 nm, 5 nm to 80 nm, 5 nm to 75 nm, 5 nm to 60 nm, 5 nm to 50 nm, 5 nm to 40 nm, 5 nm to 30 nm, 5 nm to 25 nm, 5 nm to 21 nm, 10 nm to 21 nm, 11 nm to 21 nm. When the size of the transition metal composite particles is within the above-described ranges, superior electron and/or ion conductivity may be achieved and, thus, it may be advantageous in terms of battery performance and preparation process, although the present disclosure is not limited thereto.

In an exemplary embodiment of the present disclosure, the porous carbon substrate serves as a support for improving the conductivity of the transition metal composite particles for use as an electrode.

In the present disclosure, the transition metal composite particles may provide activity for reduction reaction of lithium polysulfide as being used in a cathode of a lithium-sulfur battery as a catalyst on their own. However, when the transition metal composite particles are located on the outer surface of the porous carbon substrate and/or the inner surface of pores according to the present disclosure, the adsorption of lithium polysulfide and activation of the redox reaction of sulfur may be enhanced further.

The porous carbon substrate is a material including a plurality of fine pores, and the transition metal composite particles are supported on at least one of the outer surface of the porous carbon substrate and the inner surface of pores. That is, the transition metal composite particles are located (arranged) on the outer surface of the porous carbon substrate, the inner surface of pores, that is, inside the pores of the porous carbon substrate on a surface of the porous carbon substrate, or on both the outer surface of the porous carbon substrate and the inner surface of pores.

In an exemplary embodiment of the present disclosure, the porous carbon substrate may further contain, in addition to carbon, at least one heteroelement, for example, as a doping element. Specifically, the heteroelement may include one or more selected from nitrogen (N), sulfur (S) and oxygen (O).

In another exemplary embodiment of the present disclosure, when both the porous carbon substrate and the carbon coating layer in the transition metal composite particles include at least one heteroelement, for example, as a doping element, in addition to carbon, wherein the heteroelement may be derived from the same precursor as will be described below and, thus, may be the same element.

In another exemplary embodiment of the present disclosure, the heteroelement contained in the porous carbon substrate and the carbon coating layer may independently include one or more element selected from nitrogen, sulfur and oxygen. Specifically, the heteroelement doped in the porous carbon substrate may be derived from a precursor different from that from which the heteroelement contained in the carbon coating layer is derived. For example, for improvement of binding ability to the transition metal composite particles or for improvement of binding ability to lithium polysulfide in the electrolyte, the porous carbon substrate may be doped using a precursor containing one or more element selected from nitrogen, sulfur and oxygen and then carbon composite may be formed by mixing with the transition metal particles.

In an exemplary embodiment of the present disclosure, the transition metal composite particles may be chemically and/or physically bound to one or more of the outer surface of the porous carbon substrate and the inner surface of pores.

In an exemplary embodiment of the present disclosure, the transition metal composite particles may be physisorbed to the outer surface of the porous carbon substrate and/or the inner surface of pores. Alternatively, the transition metal composite particles may be chemically bonded via C-C covalent bonding or and/or pi-pi interaction between the element present in the transition metal composite particle and the carbon atom of the porous carbon substrate. In addition, both physisorption and chemical bonding may be present between the transition metal composite particles and the porous carbon substrate.

In an exemplary embodiment of the present disclosure, the porous carbon substrate may include a plurality of fine pores on the outer surface and inside thereof. The fine pores may have an average diameter (D₅₀) of, for example, 5 nm to 100 nm, specifically 5 nm to 80 nm, 5 nm to 60 nm, or 5 nm to 50 nm. The average pore diameter (D₅₀) refers to the diameter corresponding to 50% in the pore size distribution. Pore Size Distribution (D50) is also known as the median diameter or the medium value of the pore size distribution, it is the value of the pore diameter at 50% in the cumulative distribution, that, if D50=x nm, then 50% of the pores in the sample are larger than x nm, and 50% smaller than x nm. The pore diameter can be determined by TEM as the diameter of a pore measured perpendicular to the outer surface of the porous carbon substrate and may be the largest distance between two opposite sides of the pore.

The porous carbon substrate is not limited specially as long as it includes a plurality of fine pores and thus can support the transition metal composite particles as described above.

In an exemplary embodiment of the present disclosure, the porous carbon substrate may include, for example, one or more selected from carbon nanotube (CNT), graphene, graphene oxide (GO), reduced graphene oxide (rGO), carbon black, graphite nanofiber (GNF), carbon nanofiber (CNF), activated carbon fiber (ACF), natural graphite, artificial graphite, expanded graphite, activated carbon and fullerene.

In an exemplary embodiment of the present disclosure, when the porous carbon substrate includes carbon nanotube, the carbon nanotube may include single-walled carbon nanotube (SWCNT), multi-walled carbon nanotube (MWCNT) or both. The carbon nanotube may consist of single-walled carbon nanotube (SWCNT), multi-walled carbon nanotube (MWCNT) or a mixture thereof. The porous carbon substrate may consist of single-walled carbon nanotube (SWCNT), multi-walled carbon nanotube (MWCNT) or a mixture thereof.

In another exemplary embodiment of the present disclosure, when the porous carbon substrate includes (or consists of) carbon nanotube, the carbon nanotube may be entangled carbon nanotube (CNT) formed as a secondary structure as a plurality of carbon nanotubes, as primary structures, are aggregated.

In an exemplary embodiment of the present disclosure, the entangled carbon nanotube may have improved porosity as compared to the primary structure of the carbon nanotube due to the interstitial volume formed as the carbon nanotubes are entangled.

In an exemplary embodiment of the present disclosure, the porous carbon substrate may have a size of, for example, 10-100 µm, specifically 20-50 µm, although not being limited thereto. In case that the porous carbon substrate consists of carbon nanotube, such as entangled carbon nanotube, the size of the porous carbon substrate is the average (D50) diameter of the carbon nanotube determined by TEM. When the size of the porous carbon substrate is within the above-described ranges, an advantageous effect may be achieved in terms of solid content control and electrode physical properties, such as adhesion, and battery performance (output, capacity, etc.) when preparing a slurry for forming an electrode active material layer.

In an exemplary embodiment of the present disclosure, the porous carbon substrate may have a pore volume of, for example, 1-5 cm³/g, specifically 1-4 cm³/g. For example, the pore volume may be calculated from the analysis of a N₂ isotherm obtained from adsorption of liquid nitrogen.

In an exemplary embodiment of the present disclosure, the porous carbon substrate may have a BET specific surface area of, for example, 150-2,000 m²/g, specifically 250-700 m²/g, although not being limited thereto.

The BET specific surface area may be measured by a known BET method for measuring BET specific surface area. For example, the BET specific surface area may be calculated from nitrogen gas adsorption at a temperature of liquid nitrogen (77 K) using BEL Japan's BELSORP-mino II.

As described above, in an aspect of the present disclosure, there is provided a carbon composite including the transition metal composite particles on at least one of the outer surface of the porous carbon substrate and the inner surface of pores.

In an exemplary embodiment of the present disclosure, the carbon composite may have an average particle diameter (D₅₀) of, for example, 10-100 µm, specifically 20-50 µm. In addition, the carbon composite may have a pore volume of, for example, 0.5-4 cm³/g, specifically 1-3 cm³/g. In addition, the carbon composite may have a BET specific surface area of, for example, 150-500 m²/g, specifically 250-300 m²/g.

In an exemplary embodiment of the present disclosure, the content of the transition metal composite particles may be, for example, 15 wt% or less based on 100 wt% of the carbon composite. Specifically, the content of the transition metal composite particles may be 5 wt% to 15 wt%. When the content of the transition metal composite particles is within the above-described ranges, a superior effect may be achieved in terms of electron and/or ion conductivity in an electrode while ensuring sufficient sites that exhibit catalytic activity. As a result, a battery performance using the same may exhibit improved performance, although the present disclosure is not limited thereto.

In another embodiment of the present disclosure, the weight ratio of the porous carbon substrate and the transition metal composite particles in the carbon composite may be, for example, 95:5 to 70:30. Specifically, the weight ratio of the porous carbon substrate and the transition metal composite particles may be 90:10 to 80:20 or 95:5 to 85:15. If the weight ratio of the porous carbon substrate and the transition metal composite particle is within the above-mentioned range, while sufficiently securing a position showing catalytic activity, the aggregation phenomenon among the transition metal composite particles may be improved, thereby improving the resistance properties. Accordingly, an excellent effect may be exhibited in terms of improving the performance of a battery using the same, but the present disclosure is not limited thereto.

In an exemplary embodiment of the present disclosure, the carbon composite contains a heteroelement in at least one of the porous carbon substrate and the carbon coating layer. The content of the heteroelement may be, for example, 0.1 wt% or larger, specifically 0.5 wt% or larger, based on 100 wt% of the carbon composite. The content of the heteroelement may be, for example, 20 wt% or less, specifically 10 wt% or less, based on 100 wt% of the carbon composite. The content of the heteroelement may be, for example, 0.1 wt% to 20 wt%, specifically 0.5 wt% to 10 wt%, based on 100 wt% of the carbon composite. When the content of the heteroelement is within the above-described ranges, a superior effect may be achieved in terms of adsorbing lithium polysulfide while promoting the catalytic activity of transition metals.

In an exemplary embodiment of the present disclosure, as described above, the core of the transition metal composite particles may include or consist of transition metal particles formed from bonding between transition metal atoms.

In another exemplary embodiment of the present disclosure, the carbon composite may further contain a transition metal element released from the transition metal particles as single atoms within a range not negatively affecting the catalytic activity of the carbon composite.

The state of the transition metal atoms contained in the carbon composite may be identified, for example, by extended X-ray absorption fine structure (EXAFS) analysis. Specifically, when the transition metal atoms are contained in the carbon composite as single atoms without metallic bonding, binding between the transition metal element and the heteroelement is identified from the EXAFS analysis. In contrast, when the transition metal atoms are contained as metal particles due to metallic bonding, the bonding between the transition metal elements is identified from the EXAFS analysis.

In an exemplary embodiment of the present disclosure, when the bonding between elements in the carbon composite is investigated by EXAFS analysis, the number of bonding between the transition metal elements in the carbon composite may be larger than the number of bonding between the transition metal element and the heteroelement.

In another exemplary embodiment of the present disclosure, when the bonding between elements in the carbon composite is investigated by EXAFS analysis, the peak intensity corresponding to the bonding between the transition metal elements may be, for example, at least 10 times, specifically at least 20 times, more specifically at least 50 timesthe peak intensity corresponding to the bonding between the transition metal element and the heteroelement.

The carbon composite of the present disclosure may provide the effect of improving the life characteristics of a lithium-sulfur battery by providing binding sites for lithium polysulfide, exhibiting catalytic activity for redox reaction of sulfur and allowing the lithium sulfide formed on the surface to have a 3D shape, although the mechanism of the present disclosure is not limited thereto.

In an exemplary embodiment of the present disclosure, the carbon composite may be used as a support for supporting the sulfur-based compound, which is a cathode active material, may be used as a cathode active material after being further composited with the sulfur-based compound, or may be used as an additive for a cathode on its own.

In another aspect of the present disclosure, there is provided a method for preparing the carbon composite described above.

The method for preparing the carbon composite according to another aspect of the present disclosure includes a step of mixing and heat-treating a transition metal-containing precursor, a carbon precursor and a porous carbon substrate. Specifically, the transition metal-containing precursor includes at least one element selected from cobalt (Co) and iron (Fe), and the carbon precursor includes one or more heteroelement selected from nitrogen (N), sulfur (S) and oxygen (O).

First, the transition metal-containing precursor is a precursor for forming the transition metal particles included in the core of the transition metal composite particles, and includes at least one element selected from cobalt (Co) and iron (Fe).

In an exemplary embodiment of the present disclosure, the transition metal-containing precursor may include one or more selected from a metal salt, a metal acetylacetonate, metal hydroxide, metal chloride, metal oxide, and metal chloride hydrate, which contain the transition metal element.

In another exemplary embodiment of the present disclosure, the transition metal-containing precursor may include only a metal salt containing the transition metal element. When the transition metal-containing precursor includes only the metal salt, the method for preparing the transition metal composite particles may be simplified. As a result, it is easier to control the size of the prepared transition metal composite particles and to improve catalytic activity.

In an exemplary embodiment of the present disclosure, the transition metal-containing precursor may include a cobalt metal salt, which is, for example, one or more selected from cobalt acetyl acetonate, cobalt hydroxide, cobalt chloride, cobalt oxide, and cobalt chloride hydrate, such as cobalt chloride hexahydrate.

In an exemplary embodiment of the present disclosure, the transition metal-containing precursor may include an iron metal salt, which is, for example, one or more selected from iron acetyl acetonate, iron hydroxide, iron cobalt chloride, iron cobalt oxide, and iron chloride hydrate , such as iron chloride hexahydrate.

In an exemplary embodiment of the present disclosure, the transition metal-containing precursor may further include, in addition to the precursor providing cobalt and/or iron, a precursor containing another transition metal element. The transition metal element that may be further contained may be, for example, one or more selected from zinc (Zn), vanadium (V), chromium (Cr), manganese (Mn), nickel (Ni), copper (Cu), zirconium (Zr), niobium (Nb), molybdenum (Mo), technetium (Tc), rubidium (Ru), rhodium (Rh), palladium (Pd), silver (Ag), cadmium (Cd), lanthanum (La), hafnium (Hf), tantalum (Ta), tungsten (W), osmium (Os), iridium (Ir), cerium (Ce), gadolinium (Gd), scandium (Sc), titanium (Ti), gallium (Ga) and indium (In).

In another exemplary embodiment of the present disclosure, the transition metal-containing precursor may further include a nickel metal salt, which is for example, one or more selected from nickel acetyl acetonate, nickel hydroxide, nickel cobalt chloride, nickel cobalt oxide, and nickel chloride hydrate.

In an exemplary embodiment of the present disclosure, the carbon precursor is a precursor for forming a carbon coating layer, which is for coating at least a part of the surface of the transition metal particles.

In the present disclosure, the carbon precursor, which contains at least one heteroelement selected from nitrogen, sulfur and oxygen, may serve as a precursor for doping the heteroelement in at least one of the carbon coating layer and the porous carbon substrate.

In an exemplary embodiment of the present disclosure, the carbon precursor is not specially limited as long as it contains one or more heteroelement selected from nitrogen, sulfur and oxygen in addition to carbon and can provide a crystalline carbon coating layer as being carbonized, as described above.

For example, the carbon precursor may include one or more selected from dopamine, polydopamine, melamine, 1,10-phenanthroline, 1,10-melamine, polyaniline, carbon nitride (g-CN), glucose and phenylenediamine, which contain carbon and nitrogen elements.

In an exemplary embodiment of the present disclosure, the porous carbon substrate is the same as described above.

The method for preparing a carbon composite includes a step of mixing and heat-treating the transition metal-containing precursor, the carbon precursor and the porous carbon substrate.

In an exemplary embodiment of the present disclosure, a weight ratio of the transition metal-containing precursor and the carbon precursor may be, for example, 1:0.5 to 1:5, specifically 1:0.5 to 1:2, more specifically 1:0.5 to 1:1. In an exemplary embodiment of the present disclosure, a weight ratio of the transition metal-containing precursor and the porous carbon substrate may be, for example, 1:1 to 10, specifically 1:3 to 8, more specifically 1:3 to 7. In an exemplary embodiment of the present disclosure, the carbon precursor and the porous carbon substrate may be, for example, 0.5:10 to 5:1, specifically 0.5:8 to 2:3, more specifically 0.5:7 to 1:3.

In an exemplary embodiment of the present disclosure, a weight ratio of the transition metal-containing precursor, the carbon precursor and the porous carbon substrate may be, for example, 1:0.5 to5:1 to10, specifically 1:0.5 to 2:3 to 8, more specifically 1:0.5 to 1:3 to 7. A superior effect may be achieved in terms of the performance of the prepared carbon composite when the weight ratio of the transition metal-containing precursor, the carbon precursor and the porous carbon substrate is within the above-described ranges, although the present disclosure is not limited thereto.

In an exemplary embodiment of the present disclosure, the method for preparing a carbon composite may include a step of mixing the transition metal-containing precursor and the carbon precursor first and conducting heat treatment after mixing the porous carbon substrate. If the porous carbon substrate is mixed after the transition metal-containing precursor and the carbon precursor are first mixed for the production of the carbon composite, there may be an advantageous effect in terms of thickness uniformity of the carbon coating layer and size uniformity of the transition metal composite particles, but the present disclosure is not limited thereto.

In an exemplary embodiment of the present disclosure, the method for preparing a carbon composite may include:
(S1) a step of preparing a metal-carbon (M-C) precursor complex by mixing the transition metal-containing precursor and the carbon precursor;
(S2) a step of preparing a metal-carbon (M-C)-substrate precursor complex by mixing the metal-carbon precursor complex and the porous carbon substrate; and
(S3) a step of heat-treating the metal-carbon-substrate precursor complex.

In the step (S1), when the transition metal-containing precursor and the carbon precursor are mixed, transition metal particles are formed from the transition metal-containing precursor and a metal-carbon (M-C) precursor complex is prepared as the carbon precursor is bound to the surface thereof physically and/or chemically.

In an exemplary embodiment of the present disclosure, the mixing of the transition metal-containing precursor and the carbon precursor may be performed in an adequate solvent, and stirring may be conducted. When the transition metal-containing precursor is a metal salt containing a transition metal element, the solvent may be specifically water, although not being limited thereto.

In an exemplary embodiment of the present disclosure, the mixing in the step (S1) may be performed at room temperature, for example at 23°C to 25°C.

In an exemplary embodiment of the present disclosure, when stirring is conducted during the mixing in the step (S1), the stirring may be performed, for example, at 200 rpm to 250 rpm, specifically at 220 rpm to 240 rpm. A superior effect may be achieved in terms of the uniformity of the size of the formed transition metal particles when the stirring is performed under the above-described conditions, although the present disclosure is not limited thereto.

In an exemplary embodiment of the present disclosure, a solution wherein the transition metal-containing precursor and the carbon precursor are mixed of the step (S1) may have a solid content of, for example, 10 wt% to 50 wt%.

In an exemplary embodiment of the present disclosure, the transition metal-containing precursor and the carbon precursor may be mixed at a molar ratio of, for example 1:2-2: 1, specifically 1:1. A superior effect may be achieved in terms of the uniformity of the thickness and size of the carbon coating layer on the surface of the prepared transition metal composite particles when the molar ratio of the transition metal-containing precursor and the carbon precursor is within the above-described ranges, although the present disclosure is not limited thereto.

In the step (S2), a metal-carbon (M-C)-substrate precursor complex wherein the prepared metal-carbon precursor complex is supported on at least one of the outer surface of the porous carbon substrate and the inner surface of pores is prepared.

In an exemplary embodiment of the present disclosure, the prepared metal-carbon precursor complex may be dispersed in the solvent used in the step (S1), e.g., water, and a dispersion wherein the metal-carbon precursor complex and the porous carbon substrate are dispersed may be prepared by adding the porous carbon substrate to the dispersion of the metal-carbon precursor complex.

In an exemplary embodiment of the present disclosure, the dispersion of the metal-carbon precursor complex and the porous carbon substrate for preparation of the metal-carbon-substrate precursor complex may have a pH of, for example, 8-9.

In another exemplary embodiment of the present disclosure, the step (S2) may further include a step of adding a pH-adjusting agent for controlling the acidity of the dispersion wherein a mixture of the metal-carbon precursor complex and the porous carbon substrate, e.g., the metal-carbon precursor complex and the porous carbon substrate, is dispersed.

The pH-adjusting agent may be a basic compound or an acidic compound depending on the pH of the prepared dispersion.

In an exemplary embodiment of the present disclosure, the pH-adjusting agent may include a basic compound, and the basic compound may be, for example, an amine-based compound, such as an amine-based compound having one or more, such as two to three, especially three hydroxy groups. The amine-based compound may include, for example, tris(hydroxymethyl)aminomethane (TRIS).

In another exemplary embodiment of the present disclosure, the pH-adjusting agent may include an acidic compound, and the acidic compound may be, for example, an organic carboxylic acid. The organic carboxylic acid may include, for example, one or more selected from formic acid, acetic acid, propionic acid, butyric acid, pivalic acid, oxalic acid, malonic acid, succinic acid, glutaric acid, adipic acid, acrylic acid, benzoic acid, and phthalic acid.

In an exemplary embodiment of the present disclosure, when the pH-adjusting agent is further added, the pH-adjusting agent may be added in an amount of 100 to 800 parts by weight, for example, 200 to 700 parts by weight or 300 to 600 parts by weight, specifically 300 to 400 parts by weight or 300 to 350 parts by weight, based on 100 parts by weight of the transition metal-containing precursor used in the step (S1), although not being limited thereto.

In an exemplary embodiment of the present disclosure, stirring may be conducted in the step (S2). For example, the stirring may be performed at room temperature, and may be performed for 12 to 48 hours, specifically for 20 to 30 hours, e.g., for 24 hours.

In an exemplary embodiment of the present disclosure, the step (S2) may further include a step of filtering and washing after mixing the metal-carbon precursor complex and the porous carbon substrate.

In an exemplary embodiment of the present disclosure, the washing may be performed using, for example, water, an organic solvent or a mixture solvent thereof. In an exemplary embodiment of the present disclosure, the washing may be performed by washing with water 1-3 times and then once again using an alcohol-based organic solvent such as ethanol, etc., although the present disclosure is not limited thereto.

In an exemplary embodiment of the present disclosure, the step (S2) may further include a step of drying after mixing the metal-carbon precursor complex and the porous carbon substrate and then filtering and washing the same.

In an exemplary embodiment of the present disclosure, the drying may be performed, for example, in vacuo and may be performed at 50°C to 70°C, specifically at 60°C.

In the step (S3), the prepared metal-carbon-substrate precursor complex is heat-treated to prepare a carbon composite wherein a transition metal composite particles including a core including transition metal particles on one or more of the outer surface of a porous carbon substrate and the inner surface of pores and a carbon coating layer coating at least a part of the surface of the core are supported. Through the heat treatment, a heteroelement contained in the carbon precursor may be doped in at least one of the porous carbon substrate and the carbon coating layer.

In an exemplary embodiment of the present disclosure, the heat treatment may be performed, for example, at 600°C to 1,000°C, specifically at 750°C to 850°C, e.g., at 800°C.

In an exemplary embodiment of the present disclosure, the heat treatment may be performed at a constant heating rate selected from a range of 0.5 °C/min to 2 °C/min.

In an exemplary embodiment of the present disclosure, the heat treatment may be performed at a heating rate of 1 °C/min.

The carbon composite described above may be prepared by the method described above.

In another aspect of the present disclosure, there is provided a cathode active material including the carbon composite according to the invention as described herein and a sulfur-based compound. In another aspect of the present disclosure, there is provided a cathode including the cathode active material.

The cathode may include a composite formed by using the carbon composite as a support for a cathode active material and mixing the cathode active material with a sulfur-based compound.

In an exemplary embodiment of the present disclosure, the sulfur-based compound may be, for example, one or more selected from sulfur (S₈), lithium sulfide (Li₂S), lithium polysulfide (Li₂Sx, 2 ≤ x ≤ 8) and a disulfide compound, although not being limited thereto.

In an exemplary embodiment of the present disclosure, the carbon composite and the sulfur-based compound may be mixed at a ratio of, for example, 1:9 to 9: 1. Specifically, they may be mixed at a ratio of 1:9 to 5:5, more specifically 2:8 to 4:6.

In an exemplary embodiment of the present disclosure, the cathode active material may be formed by mixing the carbon composite and the sulfur-based compound and then heat-treating the same. The heat treatment may be performed, for example, at 130°C to 200°C, specifically 130°C to 180 °C or 150°C to 160°C.

In an exemplary embodiment of the present disclosure, the cathode for a lithium-sulfur battery may further include a binder in addition to the cathode active material including the carbon composite and the sulfur-based compound. The binder may be any binder that can be used for a cathode of a lithium-sulfur battery without special limitation.

In one embodiment of the present disclosure, the binder may include, for example, PVDF (polyvinylidene fluoride), and specifically, may include PVDF dispersed in NMP (N-methyl-2-pyrrolidone).

In another embodiment of the present disclosure, the binder may include, for example, an aqueous binder such as SBR (styrene butadiene rubber), and specifically, may include an aqueous binder dispersed in an aqueous solvent such as water.

In another exemplary embodiment of the present disclosure, the cathode for a lithium-sulfur battery may further include a conductive material, an additive, etc. in addition to the cathode active material and the binder. The binder, the conductive material and the additive may be those commonly used in the art.

In another exemplary embodiment of the present disclosure, the cathode for a lithium-sulfur battery may include a cathode current collector, and may include a cathode active material layer coated on one or both sides of the current collector together with the cathode active material and the binder.

The cathode current collector is not specially limited as long as it has high conductivity without inducing chemical change of the battery.

In an exemplary embodiment of the present disclosure, the cathode including the carbon composite may exhibit superior initial capacity and cycle stability, although the effect of the present disclosure is not limited thereto.

In an exemplary embodiment of the present disclosure, the loading amount of sulfur (S) in the cathode for a lithium-sulfur battery may be, for example, 2 mg/cm² or more, specifically 2.0 mg/cm² to 2.5 mg/cm².

In another aspect of the present disclosure, there is provided alithium-sulfur battery including a cathode, an anode, a separator disposed between the cathode and the anode, and an electrolyte, and the cathode includes the carbon composite described above as a cathode active material and a sulfur-based compound.

In an exemplary embodiment of the present disclosure, the anode and the separator are not specially limited as long as they are those that can be used in a lithium-sulfur battery without negatively affecting the purpose of the present disclosure.

In an exemplary embodiment of the present disclosure, for example, lithium metal may be used for the anode.

In an exemplary embodiment of the present disclosure, the separator is not specially limited as long as it is one that can be commonly used in a lithium-sulfur battery.

In an exemplary embodiment of the present disclosure, the separator may include a porous polyolefin substrate and may further include inorganic particles on at least one side of the porous polyolefin substrate, if necessary. In addition, the separator may further include a binder for binding the inorganic particle, if necessary.

In another exemplary embodiment of the present disclosure, the separator may be a film-type electrolyte membrane including a solid electrolyte and may further include a binder for binding the solid electrolyte, if necessary. The solid electrolyte may be any one that can be commonly used in a lithium-sulfur battery such as a polymer-based solid electrolyte, an inorganic solid electrolyte, a mixture thereof, etc., without limitation.

In an exemplary embodiment of the present disclosure, the electrolyte may be any one that can be commonly used in a lithium-sulfur battery. The electrolyte may include a lithium salt and a nonaqueous solvent.

The lithium salt may be any one that can be commonly used in an electrolyte of a lithium-sulfur battery without limitation. The lithium salt may include, for example, one or more selected from LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, lithium chloroborate, lower aliphatic lithium carbonate, lithium tetraphenylborate and lithium imide, although not being limited thereto.

The nonaqueous solvent may be any one that can be commonly used in an electrolyte of a lithium-sulfur battery without limitation. The nonaqueous solvent may include, for example, one or more selected from a cyclic carbonate solvent, a linear carbonate solvent, an ester solvent and a ketone solvent, although not being limited thereto.

In an exemplary embodiment of the present disclosure, the electrolyte may include (CF₃SO₂)₂NLi as a lithium salt and may include dioxolane (DOL)/dimethoxyethane (DME) as a nonaqueous solvent. For example, the electrolyte may further include a common additive such as LiNO₃.

In an exemplary embodiment of the present disclosure, the lithium-sulfur battery may be, for example, coin-shaped, cylindrical, pouch-shaped or square-shaped, although not being specially limited thereto. In addition, the lithium-sulfur battery may be used as a battery cell used as a power supply of a small device or may be used as a unit cell of a medium or large battery module including a plurality of battery cells, although not being specially limited thereto.

In an exemplary embodiment of the present disclosure, a lithium-sulfur battery using a cathode including the carbon composite may exhibit superior kinetic activity for redox reaction of sulfur and may exhibit superior effect in terms of the initial capacity and cycle stability of the battery, although the effect of the present disclosure is not limited thereto.

In an exemplary embodiment of the present disclosure, the lithium-sulfur battery may exhibit improved energy density due to increased loading amount of sulfur in the electrode, although the effect of the present disclosure is not limited thereto.

In an exemplary embodiment of the present disclosure, the lithium-sulfur battery may have an electrolyte/sulfur (E/S) ratio of 10 µL/mg or lower. Whereas the existing cathode is limited in lowering the E/S ratio because of low activity, the E/S ratio of the lithium-sulfur battery of the present disclosure can be lowered stably, although the present disclosure is not limited thereto.

In another aspect of the present disclosure, there is provided a cathode including a cathode active material including a sulfur-based compound and the carbon composite described above as a cathode additive, and a lithium-sulfur battery including the same.

In an exemplary embodiment of the present disclosure, apart from an aspect of the present disclosure wherein the carbon composite is composited with a sulfur-based compound as a support and included in a cathode as a cathode active material, the carbon composite may be included as an additive separately from the cathode active material.

In an exemplary embodiment of the present disclosure, when the carbon composite is used as a cathode additive, battery capacity may be improved and battery performance may also be improved due to improved reactivity for lithium polysulfide.

In an exemplary embodiment of the present disclosure, when the carbon composite is used as a cathode additive, the carbon composite may be included in an amount of 1 wt% to 25 wt%, for example, 1 wt% to 15 wt% or 1 wt% to 10 wt% based on the total weight of the cathode active material, the binder and the carbon composite included in the cathode active material layer, although not being limited thereto.

In an exemplary embodiment of the present disclosure, in the cathode, a sulfur-based compound or a sulfur-based compound supported on a common carbon support may be used as a cathode active material. The sulfur-based compound is the same as described above. In addition, the common carbon support may be, for example, the porous carbon substrate described above, although not being limited thereto.

The lithium-sulfur battery according to one aspect of the present invention may be used for, for example, an electric vehicle (EV), a drone, or urban air mobility (UAM), but the use of the present invention is limited thereto. it is not going to be

Hereinafter, the preparation of a carbon composite according to an exemplary embodiment of the present disclosure and preparation of a cathode active material using the same are described in detail through examples. However, the following examples are provided only to illustrate the present disclosure and the scope of the present disclosure is not limited thereto.

### [Preparation of carbon composite]

Carbon composites of Examples 1to 4 and Comparative Examples 1 to 4 were prepared with the composition described in Table 1.

**Table 1**

| | Transition metal-containing precursor (metal salt) | Carbon precursor (dopamine hydrochloride, 98 wt%) | Porous carbon substrate (CNT) | pH-adjusting agent (Trizma base, Tris)(mg) |
|---|---|---|---|---|
| Example 1 | FeCl₂·6H₂O, 142 mg | 100 mg | 300 mg | 960 |
| Example 2 | CoCl₂·6H₂O, 251 mg | 200 mg | 300 mg | 860 |
| Example 3 | CoCl₂·6H₂O, 251 mg | 200 mg | 300 mg | 860 |
| Example 4 | CoCl₂·6H₂O, 251 mg | Glucose, 200 mg | 300 mg | 860 |
| Comparative Example 1 | - | - | 300 mg | - |
| Comparative Example 2 | NiCl₃·6H₂O, 627 mg | 500 mg | 300 mg | 2260 |
| Comparative Example 3 | FeCl₂·6H₂O, 142 mg | - | 300 mg | 960 |
| Comparative Example 4 | CoCl₂·6H₂O, 251 mg | - | 300 mg | 860 |

### Example 1 (FeC@CNT)

First, after adding ferrous chloride hydrate (FeCl₂·6H₂O, 99%, Sigma-Aldrich) and dopamine hydrochloride (98 wt%, Sigma-Aldrich) at a molar ratio of 1:1 to 500 mL of distilled water as described in Table 1, a iron-carbon (Fe-C) precursor complex was prepared by stirring at room temperature (23°C) and 230 rpm for 30 minutes.

Then, after adding a fixed amount of MWCNT (multi-wall carbon nanotube; BET specific surface area: 275 m²/g, Carbon Nano-material Technology Co., LTD), a dispersion was prepared by stirring at room temperature for 30 minutes. Then, the pH of the prepared dispersion was adjusted to 8.5 by adding a fixed amount of Trizma base (tris(hydroxymethyl)aminomethane, TRIS). After stirring the dispersion at room temperature for 24 hours and then filtering, an iron-carbon-CNT (Fe-C-CNT) precursor complex was prepared by washing 3 times with distilled water and then once with ethanol and then drying at 60°C.

A carbon composite (D₅₀ 35 µm) was obtained by heat-treating the prepared iron-carbon-CNT precursor complex in an electric tube furnace at 800°C for 2 hours (heating rate 1 °C/min) under argon atmosphere. The obtained carbon composite included: the MWCNT as a porous carbon substrate; transition metal composite particles located on at least one of the outer surface of the MWCNT and the inner surface of pores and including a core including iron particles and a carbon coating layer coating at least a part of the surface of the core; and doped nitrogen element. A ratio of the thickness of the carbon coating layer to the average particle diameter (D₅₀) of the transition metal composite particles was 15%.

### Example 2 (CoC@CNT)

A carbon composite (D₅₀ 35 µm) was obtained in the same manner as in Example 1 except that CoCl₂·6H₂O(99%, Sigma-Aldrich) was used instead of FeCl₂·6H₂O as a metal salt in the amounts described in Table 1. The obtained carbon composite included: the MWCNT (multi-wall carbon nano tube) as a porous carbon substrate; transition metal composite particles located on at least one of the outer surface of the CNT and the inner surface of pores and including a core including cobalt particles and a carbon coating layer coating at least a part of the surface of the core; and doped nitrogen element. A ratio of the thickness of the carbon coating layer to the average particle diameter (D₅₀) of the transition metal composite particles was 15%.

### Example 3 (CoC@CNT, one-pot method)

According to the following method, as shown in Table 1, a transition metal-containing precursor, a carbon precursor, and a porous carbon substrate were simultaneously mixed and heat-treated to prepare a carbon composite.

First, cobalt hydrochloride hydrate (CoCl₂·6H₂O), dopamine hydrochloride (98 wt%), MWCNT (multi-walled carbon nanotube) (BET specific surface area 275 m²/g) and Trizma base (tris(hydroxymethyl)aminomethane, TRIS) were added in the amounts shown in Table 1 to 500 mL of distilled water, stirred at room temperature (23°C) at 230 rpm for 24 hours, filtered, washed 3 times with distilled water and then 1 time with ethanol, and dried at 60°C to prepare a cobalt-carbon-CNT precursor complex (Co-C-CNT precursor complex).

The prepared cobalt-carbon-CNT precursor composite was placed in a tube electric furnace under an argon atmosphere and heat-treated at 800°C for 2 hours (heating rate 1°C/min) to obtain a carbon composite. The obtained carbon composite included: the MWCNT as a porous carbon substrate; transition metal composite particles located on at least one of the outer surface of the MWCNT and the inner surface of the pores and including a core containing cobalt particles and a carbon coating layer covering at least a part of the surface of the core; and doped nitrogen element. At this time, the ratio of the thickness of the carbon coating layer to the average particle diameter (D₅₀) of the transition metal composite particles was 100% (1:1).

### Example 4 (CoC@CNT, glucose used as a carbon precursor)

A carbon composite was obtained in the same manner as in Example 2, except that glucose was used instead of dopamine hydrochloride (98 wt%) as a carbon precursor. The obtained carbon composite included: the MWCNT (multi-walled carbon nanotubes) as a porous carbon substrate; transition metal composite particles located on at least one of the outer surface of the MWCNT and the inner surface of the pores and including a core containing cobalt particles and a carbon coating layer covering at least a part of the surface of the core; and doped oxygen element. At this time, the carbon coating layer was formed only on a part of the surface of the transition metal composite particles. At this time, the ratio of the thickness of the carbon coating layer to the average particle diameter (D₅₀) of the transition metal composite particles was 100%(1:1)

### Comparative Example 1

MWCNT (multi-wall carbon nanotube; BET specific surface area: 275 m²/g) was used as a carbon composite without supporting transition metal composite particles.

### Comparative Example 2

A carbon composite (D₅₀ 35 µm) was obtained in the same manner as in Example 1 as described in Table 1 except for using NiCl₃·6H₂O instead of FeCl₂·6H₂O as a metal salt. The obtained carbon composite included: the MWCNT (multi-wall carbon nano tube) as a porous carbon substrate; transition metal composite particles located on at least one of the outer surface of the MWCNT and the inner surface of pores and including a core including nickel particles and a carbon coating layer coating at least a part of the surface of the core; and doped nitrogen element. A ratio of the thickness of the carbon coating layer to the average particle diameter of the transition metal composite particles was 15%.

### Comparative Example 3

A carbon composite (D₅₀ 35 µm) was obtained in the same manner as in Example 1 except that dopamine hydrochloride was not used. The obtained carbon composite included: the MWCNT (multi-wall carbon nano tube) as a porous carbon substrate; and transition metal composite particles located on at least one of the outer surface of the MWCNT and the inner surface of pores and including a core including iron particles and a carbon coating layer coating at least a part of the surface of the core. A ratio of the thickness of the carbon coating layer to the average particle diameter of the transition metal composite particles was 55%.

### Comparative Example 4

A carbon composite (D₅₀ 35 µm) was obtained in the same manner as in Example 2 except that dopamine hydrochloride was not used. The obtained carbon composite included: the MWCNT (multi-wall carbon nano tube) as a porous carbon substrate; and transition metal composite particles located on at least one of the outer surface of the MWCNT and the inner surface of pores and including a core including cobalt particles and a carbon coating layer coating at least a part of the surface of the core. A ratio of the thickness of the carbon coating layer to the average particle diameter of the transition metal composite particles was 55%.

### [Confirmation of structure of carbon composite]

### Microscopic observation of carbon composite

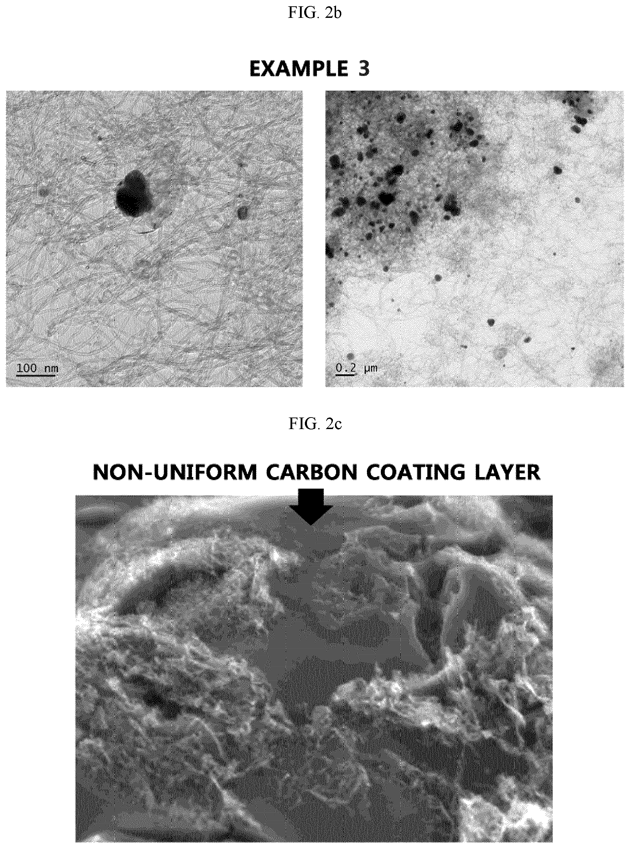

The TEM images of the carbon composites prepared in Example 1, Example 2 and Comparative Example 2 are shown in FIG. 2a, the TEM image of the carbon composite of Example 3 is shown in FIG. 2b, and the SEM image of the carbon composite of Example 4 is shown in FIG. 2c.

Referring to FIG. 2a, metal composite particles (the core is made of transition metal particles, and the shell is made of a carbon coating layer) were formed uniformly on the surface of MWCNT in the carbon composites of Example 1, Example 2 and Comparative Example 2, and the average particle diameter (D₅₀) of the formed metal composite particles was 10 nm (Example 1), 20 nm (Example 2) and 30 nm (Comparative Example 2), respectively.

In addition, it was confirmed that carbon coating layers were formed on the surface of transition metal particles for Example 1, Example 2 and Comparative Example 2. The thickness of the carbon coating layer was 1 nm (Example 1), 1 nm (Example 2) and 1 nm (Comparative Example 2), respectively, and the deviation between the thicknesses of the carbon coating layer randomly measured at 10 points was 5 nm or less.

Referring to FIG. 2b, in the carbon composite of Example 3, the transition metal composite particles (the core is made of cobalt and the shell is made of a carbon coating layer) were partially aggregated on the surface of the MWCNT. Through comparison of the shapes of the carbon composites of Example 2 and Example 3, it was confirmed that the preparation as in Example 2 is advantageous in terms of size uniformity of the transition metal composite particles.

In addition, referring to FIG. 2c, the carbon composite of Example 3 including oxygen element as a doping element by using glucose as a carbon precursor has poor uniformity in the thickness of the carbon coating layer formed on the shell of the transition metal composite particles, in comparison to Example 2. In short, it was confirmed that a standard deviation (△d) of the thickness measured at 10 random points of the carbon coating layer of Example 2 was 5 nm or less, whereas a thickness measured at 10 random points of the carbon coating layer of Example 3 was 10 nm to 100 nm, respectively, and a standard deviation (△d) of the thickness was 50 nm.

### Content of transition metal particles

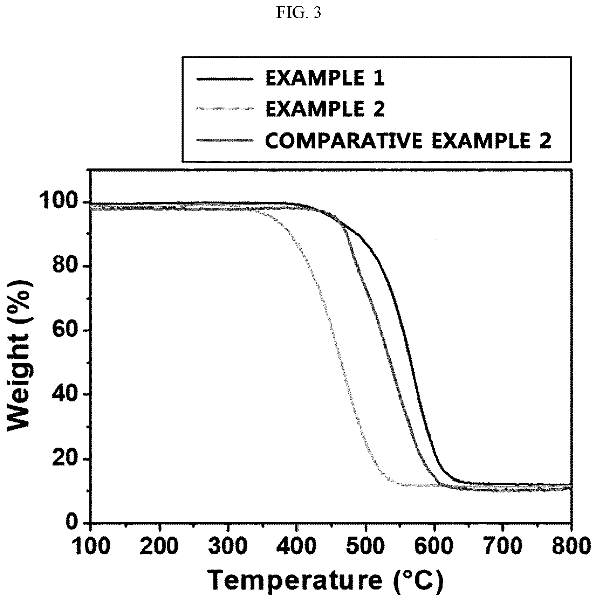

TGA analysis was conducted to measure the content of transition metal particles supported on the carbon composites prepared in Example 1, Example 2 and Comparative Example 2, and the result is shown in FIG. 3. In the TGA analysis, weight loss was measured while heating the prepared carbon composites from 100°C to 800°C (heating rate 10 °C/min).

Referring to FIG. 3, the weight showing no more temperature change during heating corresponds to the weight of the transition metal particles. It was confirmed that the content of the transition metal particles was 10 wt% for all the carbon composites of Example 1, Example 2 and Comparative Example 2.

### Confirmation of heteroelement doping

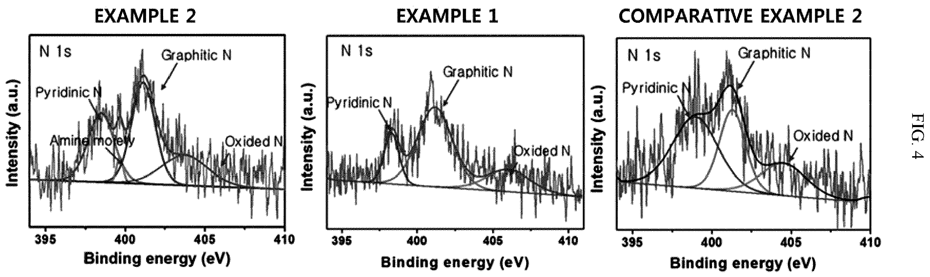

XPS analysis was conducted on the carbon composites prepared in Example 1, Example 2 and Comparative Example 2. The peaks of nitrogen element identified from the XPS analysis are shown in FIG. 4.

Referring to FIG. 4, it was confirmed that the carbon composites prepared in Example 1, Example 2 and Comparative Example 2 contain nitrogen element. It is thought that the nitrogen element is derived from the carbon precursor dopamine. It was confirmed that the nitrogen element exists mostly as graphitic N and pyridinic N.

### Confirmation of binding state of transition metal elements

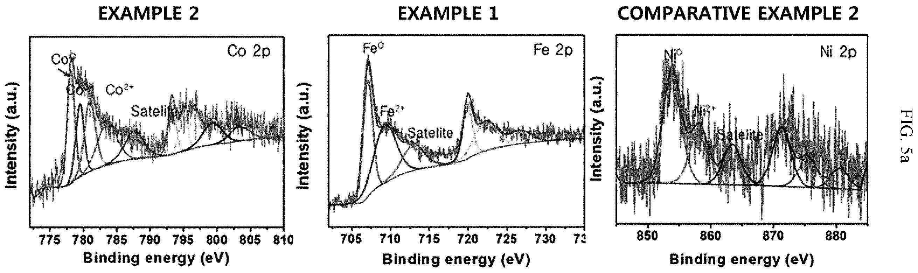

The 2p spectra of transition metal elements of the carbon composites of Example 1, Example 2 and Comparative Example 2 obtained by XPS analysis are shown in FIG. 5a. Referring to FIG. 5a, it was confirmed that the transition metal elements exist mostly as metals in Example 1 (Fe), Example 2 (Co) and Comparative Example 2 (Ni).

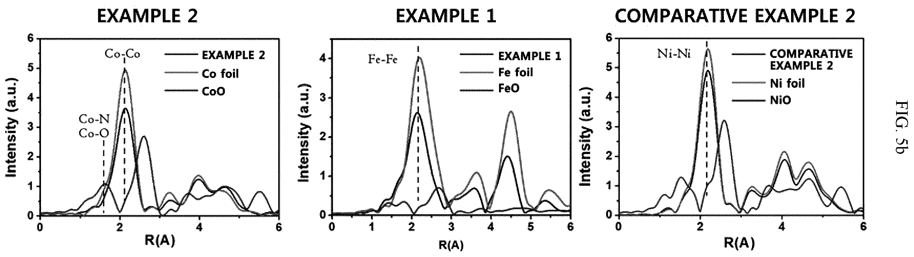

In addition, the binding state of the transition metal elements in the carbon composites of Example 1, Example 2 and Comparative Example 2 was investigated by EXAFS. The result is shown in FIG. 5b. FIG. 5b shows the results for metal foils (Co foil, Fe foil and Ni foil) of the corresponding transition metal atoms and transition metal oxides (CoO, FeO and NiO)

Referring to FIG. 5b, it was confirmed that the number of bonding between the transition metal elements was larger than the number of bonding between the transition metal element and the heteroelement for all the carbon composites of Example 1, Example 2 and Comparative Example 2. This suggests that the catalytic activity of the carbon composite is derived from the transition metal particles.

### [Preparation of lithium-sulfur battery]

For evaluation of lithium-sulfur batteries using the carbon composites prepared above, coin-type lithium-sulfur batteries were prepared as follows.

### Preparation of cathode

After mixing 30 wt% of the carbon composite of each of Example 1, Example 2 and Comparative Examples 1 to 4 and 70 wt% of sulfur (sulfur powder, Sigma Aldrich), a cathode active material was obtained by performing isothermal heat treatment at 155°C for 8 hours.

For fabrication of a working electrode, a cathode slurry was prepared by mixing the cathode active material prepared above and Polyacrylonitirile binder(PAN binder, LA 132) as a binder at a weight ratio of 9:1 using an NMP (N-methyl-2-pyrrolidone) solvent.

The prepared cathode slurry was coated on a carbon-coated Al foil and then dried at 60°C for 8 hours. Subsequently, a cathode was prepared by pressing the electrode and cutting into a coin shape.

### Preparation of battery

A battery was prepared by disposing a separator between a cathode and an anode and then putting them in a case together with an electrolyte.

The cathode was prepared as described above, and a porous polypropylene membrane (Celgard 2400, Welcos Ltd.) was prepared as the separator. Lithium metal (200 µm thickness) was used as both a reference electrode and a counter electrode.

As the electrolyte, a solution containing 1.0 M LiTFSI (bis(trifluoromethane)sulfonamide lithium salt) as an electrolyte and 2.0 wt% of LiNO₃ (99.99% metal basis, Sigma-Aldrich) as an additive in a mixed solvent of dimethoxymethane and 1,3-dioxolane (DME/DOL) at a volume ratio of 1:1 (Panax E-Tec Co., Korea) was used.

The loading amount of the cathode was 2.25 mg/cm² and the E/S ratio of the battery was 10 µL/mg.

The coin-type battery was manufactured to meet the CR2032 standard, and lithium metal having a thickness of 200 µm was used as a reference electrode and a counter electrode, respectively, for the following electrochemical performance evaluation.

### [Evaluation of performance of lithium-sulfur battery]

### Evaluation of shape of lithium sulfide

Chronoamperometric analysis was conducted on the prepared battery to evaluate the shape of lithium sulfide grown on the surface of the carbon composite during the operation of the battery, and the result is shown in FIG. 6. Here, FIG.6(a) shows the current-time curve, and FIG.6(b) shows the relative current-relative time curve. Chronoamperometric analysis was conducted in a constant temperature chamber at 25 °C with PNE Solution's PESC05-0.1 equipment.

The charge-discharge characteristics of the battery was evaluated with the current density of 0.5C in the voltage range of 1.7V-2.8V.

Referring to FIG. 6 (b), it was confirmed that, whereas the lithium sulfide had a planar (2D) shape for Comparative Example 1 wherein CNT was used as the carbon composite and Comparative Example 2 wherein the carbon composite on which Ni metal particles were supported was used, the lithium sulfide had a 3D shape for Example 1 wherein the carbon composite on which Fe metal particles were supported was used and Example 2 wherein the carbon composite on which Co metal particles were supported was used.

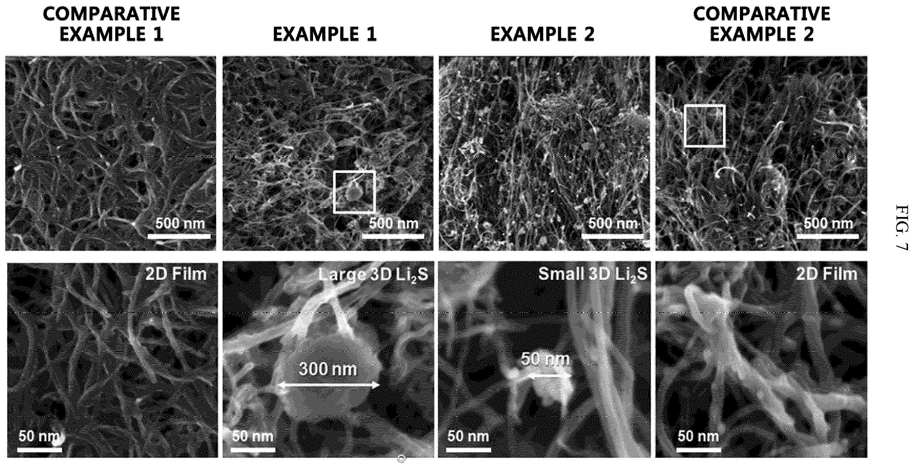

FIG. 7 shows the SEM images of the carbon composites after first discharge at a current density of 0.05 C.

Referring to FIG. 7, it was confirmed that, whereas lithium sulfide with a 3D shape was observed on the surface of the carbon composites of Example 1 and Example 2, lithium sulfide was formed with a film shape on the surface of the carbon composites of Comparative Example 1 and Comparative Example 2.

Also, referring to FIG. 7, it was confirmed that the size of lithium sulfide for Example 2 wherein the Co metal particle-supported carbon composite was used was smaller than the size of lithium sulfide for Example 1 wherein the Fe metal particle-supported carbon composite was used.

### Evaluation of battery capacity and life

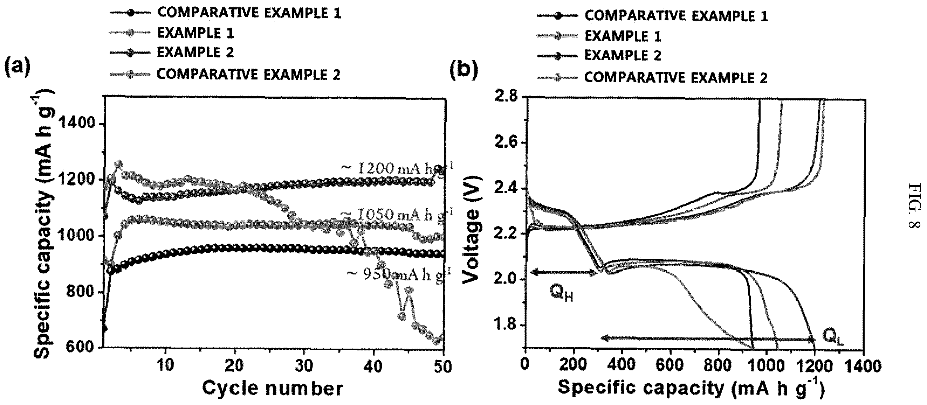

The static current characteristics of the batteries after repeating charge-discharge 50 cycles at a current density of 0.5C(1C rate ~ 1675 mA/g) and a voltage of 1.7-2.8 V are shown in FIG. 8 (a). In addition, the capacity-voltage curves during the first charge-discharge cycle are shown in FIG. 8 (b).

Referring to FIG. 8 (a), it was confirmed that, whereas the batteries using the carbon composites of Example 1, Example 2 and Comparative Example 1 operated stably for 50 charge-discharge cycles, the operation of the battery using the carbon composite of Comparative Example 2 was significantly unsatisfactory after 20 charge-discharge cycles. Meanwhile, the reversible capacity of the batteries was in the order of Example 2 (~1200 mAh/g) > Example 1 (~1050 mAh/g) > Comparative Example 1 (~950 mAh/g).

Referring to FIG. 8 (b), it was confirmed that the reactivity for conversion of lithium sulfide (Li₂S) was in the order of Example 2 > Example 1 > Comparative Example 1 > Comparative Example 2. In particular, the ratio of Q_{H}/Q_{L} shown in FIG. 8 (b) was in the order of Example 2 (0.409) < Example 1 (0.420) < Comparative Example 1 (0.482) < Comparative Example 2 (0.568). Example 2 showed the most superior improvement in the reactivity for conversion of lithium sulfide (Li₂S).

### Evaluation of activity depending on presence or absence of carbon coating layer

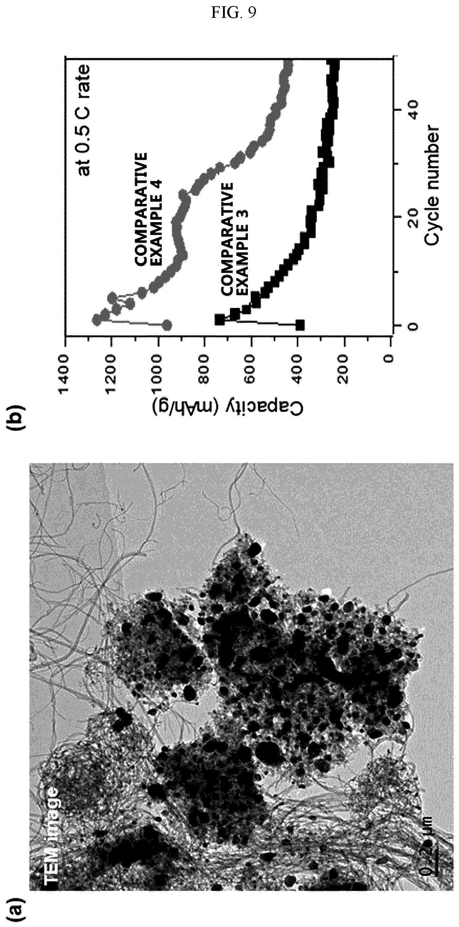

FIG. 9 shows the TEM image of the carbon composite of Comparative Example 4 (a) and the result of evaluating the performance of the batteries using the carbon composites of Comparative Example 3 and Comparative Example 4 (b) in charge-discharge cycles at 0.5 C.

The carbon composites of Comparative Example 3 and Comparative Example 4 were prepared without the addition of dopamine hydrochloride, i.e., the carbon precursor. Referring to FIG. 9 (a), it was confirmed that a plurality of transition metal particles with nonuniform sizes are supported on CNT in the carbon composite of Comparative Example 4.

Referring to FIG. 9 (b), it was confirmed that the capacity of the carbon composite of Comparative Example 4 is higher than the capacity of the carbon composite of Comparative Example 3, and that both Comparative Example 3 and Comparative Example 4 show poor operation stability with rapid decrease in the capacity during charge-discharge cycles.

Therefore, it was confirmed that the carbon coating layer of transition metal composite particles is essential for the carbon composite according to the present disclosure for stable operation stability of the battery.

## Claims

1. A carbon composite comprising:
a porous carbon substrate;
transition metal composite particles located on one or more of the outer surface of the porous carbon substrate and the inner surface of pores and comprising a core comprising transition metal particles and a carbon coating layer coating at least a part of the surface of the core; and
at least one heteroelement doped in at least one of the porous carbon substrate and the carbon coating layer,
wherein
the transition metal particles comprise at least one element selected from cobalt (Co) and iron (Fe), and
the heteroelement comprises one or more selected from nitrogen (N), sulfur (S) and oxygen (O).

2. The carbon composite according to claim 1, wherein the carbon coating layer covers the entire surface of the core.

3. The carbon composite according to claim 1 or 2, wherein the transition metal particles further comprise one or more selected from zinc (Zn), vanadium (V), chromium (Cr), manganese (Mn), nickel (Ni), copper (Cu), zirconium (Zr), niobium (Nb), molybdenum (Mo), technetium (Tc), rubidium (Ru), rhodium (Rh), palladium (Pd), silver (Ag), cadmium (Cd), lanthanum (La), hafnium (Hf), tantalum (Ta), tungsten (W), osmium (Os), iridium (Ir), cerium (Ce), gadolinium (Gd), scandium (Sc), titanium (Ti), gallium (Ga) and indium (In).

4. The carbon composite according to any of the preceding claims, wherein the carbon coating layer has a thickness of 10 nm or smaller.

5. The carbon composite according to any of the preceding claims, wherein the carbon coating layer contains crystalline carbon.

6. The carbon composite according to any of the preceding claims, wherein the carbon coating layer has a single layer structure of one layer or a multi-layer structure of two or more layers.

7. The carbon composite according to any of the preceding claims, wherein the porous carbon substrate comprises one or more selected from carbon nanotube (CNT), graphene, graphene oxide (GO), reduced graphene oxide (rGO), carbon black, graphite, graphite nanofiber (GNF), carbon nanofiber (CNF), activated carbon fiber (ACF), activated carbon and fullerene.

8. The carbon composite according to any of the preceding claims, wherein the content of the transition metal composite particles is 15 wt% or less based on 100 wt% of the carbon composite.

9. A method for preparing the carbon composite according to any of claims 1 to 8, comprising a step of mixing and heat-treating a transition metal-containing precursor, a carbon precursor and a porous carbon substrate,
wherein
the transition metal-containing precursor comprises at least one element selected from cobalt (Co) and iron (Fe), and
the carbon precursor comprises one or more heteroelement selected from nitrogen (N), sulfur (S) and oxygen (O).

10. The method for preparing the carbon composite according to claim 9, which comprises:
a step of preparing a metal-carbon (M-C) precursor complex by mixing the transition metal-containing precursor and the carbon precursor;
a step of preparing a metal-carbon (M-C)-substrate precursor complex by mixing the metal-carbon precursor complex and the porous carbon substrate; and
a step of heat-treating the metal-carbon-substrate precursor complex.

11. A cathode active material comprising: the carbon composite according to any of claims 1 to 8; and a sulfur-based compound.

12. A cathode comprising the cathode active material according to claim 11.

13. A lithium-sulfur battery comprising a cathode, an anode, a separator disposed between the cathode and the anode, and an electrolyte, wherein the cathode comprises the cathode according to claim 12.

14. A cathode comprising a cathode active material comprising a sulfur-based compound and the carbon composite according to any of claims 1 to 8 as a conductive material.

15. A lithium-sulfur battery comprising a cathode, an anode, a separator disposed between the cathode and the anode, and an electrolyte, wherein the cathode is the cathode according to claim 14.
